# DEMANDE DE BREVET EUROPEEN

(11) **EP 1 852 332 A1**
(43) Date de publication de la demande: **07.11.2007**
(21) Numéro de dépôt: 07300998.7
(22) Date de dépôt: 27.04.2007
(51) Int. Cl.: B62D 25/10

(54) **Procédé d'assemblage de la façade avant d'un véhicule**

(30) Priorité: 04.05.2006 FR 0651586
(71) Demandeur: Peugeot Citroen Automobiles SA, 78943 Vélizy-Villacoublay Cedex (FR)
(72) Inventeur: De Zutter, Edouard, 90110, ROUGEMONT LE CHATEAU (FR); Soleillant, Frank, 25200, MONTBELIARD (FR)

(57) **Abrégé**

L'invention se rapporte à un procédé d'assemblage d'un véhicule comprenant une structure, un pare-chocs (1), une armature (4) sur laquelle vient se fixer le pare-chocs (1) et un capot (5).

Selon l'invention, le procédé comprend
- une étape de fixation du capot (5) sur la structure du véhicule et
- une étape d'indexation de l'armature (4) par rapport au capot (5), de façon à positionner l'armature (4) de façon précise par rapport au capot (5).

## Description

L'invention se rapporte à un procédé d'assemblage de la façade avant d'un véhicule.

La façade d'un véhicule comprend généralement un pare-chocs, des projecteurs, des ailes et un capot.

Au cours du procédé d'assemblage de la façade avant du véhicule, Il est connu que le pare-chocs, livré soudé sur une armature, soit monté sur la façade de façon à ce que son armature soit fixée sur la structure du véhicule et/ou sur une pièce transversale au véhicule supportant des éléments de refroidissement du moteur du véhicule.

Cependant, un tel procédé d'assemblage ne permet pas un positionnement précis du pare-chocs par rapport au capot, il en résulte des jeux et affleurements non maîtrisés. De plus, les projecteurs qui peuvent être également positionnés sur la pièce transversale sont eux également mal positionnés par rapport au capot. Ainsi, un tel procédé d'assemblage ne donne pas un aspect esthétique satisfaisant au véhicule.

Un but de la présente invention est de pallier tout ou partie des inconvénients de l'art antérieur relevés ci-dessus.

A cette fin, le procédé d'assemblage selon l'invention, concerne un véhicule comprenant
- une structure,
- un pare-chocs,
- une armature sur laquelle vient se fixer le pare-chocs et
- un capot,
et est essentiellement caractérisé en ce qu'il comprend
- une étape de fixation du capot sur la structure du véhicule et
- une étape d'indexation de l'armature par rapport au capot, de façon à positionner l'armature de façon précise par rapport au capot.

Par ailleurs, l'invention peut comporter l'une ou plusieurs des caractéristiques suivantes :
- l'étape d'indexation peut être suivie d'une étape de fixation de l'armature,
- l'étape de fixation peut consister à fixer l'armature sur une pièce transversale supportant des éléments de refroidissement du moteur du véhicule,
- l'étape de fixation peut consister à fixer l'armature sur un élément de liaison positionné sur la structure du véhicule,
- l'étape d'indexation peut être précédée d'une étape de positionnement de l'armature sur l'élément de liaison afin de permettre le positionnement de l'armature selon l'axe vertical Z du véhicule,
- l'étape de fixation peut consister à fixer l'armature sur une platine supportant une poutre, la poutre étant destinée à être disposée derrière le pare-chocs et servant à absorber une partie de l'énergie due à un choc,
- le procédé peut comprendre une étape de fixation d'un projecteur, permettant l'éclairage de la partie située à l'avant du véhicule, sur l'armature,
- le procédé peut comprendre une étape de fixation du pare-chocs sur l'armature,
- l'étape d'indexation peut être réalisée à l'aide d'un gabarit disposé entre le capot et l'armature,
- au cours de l'étape d'indexation, le gabarit peut être positionné de façon provisoire entre le capot et l'armature.

D'autres particularités et avantages apparaîtront à la lecture de la description ci-après faite en référence aux figures dans lesquelles :
- la figure 1 représente une vue en perspective de la façade avant d'un véhicule automobile,
- la figure 2 représente une vue identique à la figure 1, la façade étant dépourvue de ses projecteurs et de son pare-chocs,
- la figure 3 représente une vue en perspective de l'armature de pare-chocs permettant la fixation du pare-chocs représenté à la figure 1,
- la figure 4 représente en perspective et en éclaté l'étape d'indexation de l'armature par rapport au capot grâce à un gabarit,
- les figures 5 et 6 montrent des détails de la fixation de l'armature de pare-chocs, respectivement sur un élément de liaison fixé à la structure du véhicule et sur une platine destinée à supporter la poutre de pare-chocs.

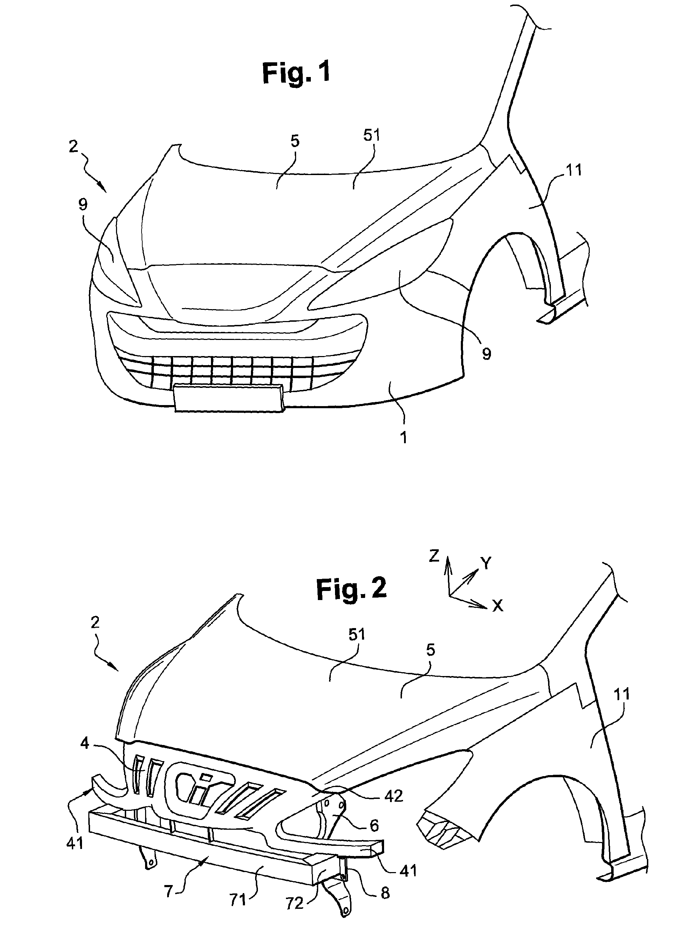

La figure 1 représente la façade avant 2 d'un véhicule automobile, qui comprend de façon classique, un pare-chocs 1 en matière plastique, des ailes latérales 11, un capot 5 et des projecteurs 9.

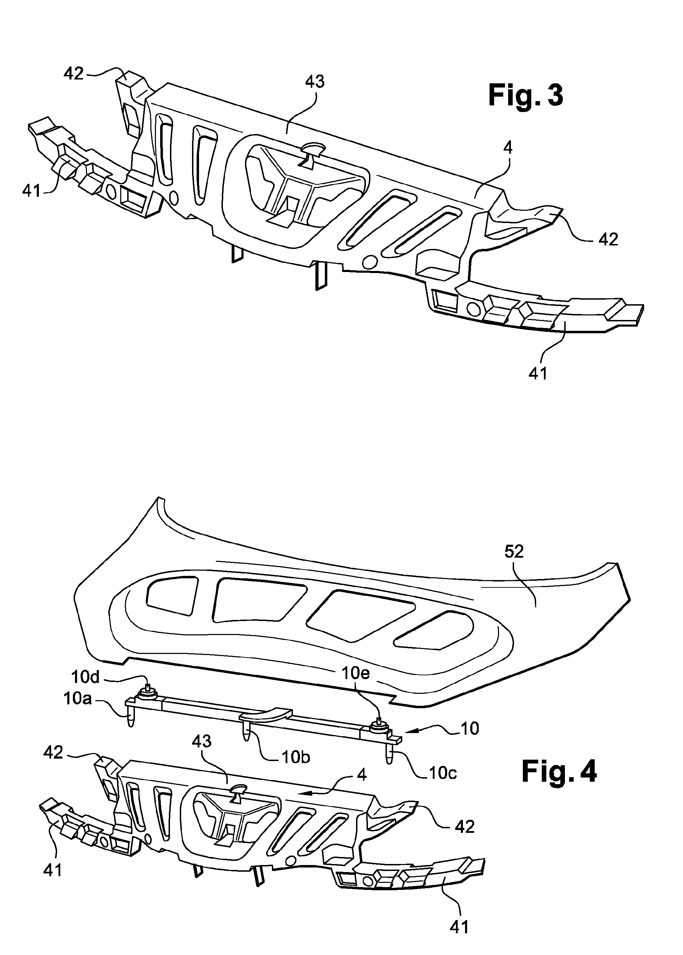

Le capot se compose d'une peau extérieure 51 et d'une doublure 52, mise en évidence à la figure 4.

La partie supérieure du pare-chocs 1 est fixée sur une armature 4, communément appelée « armature de pare-chocs ». La partie inférieure du pare-chocs 1 est supportée par une poutre de pare-chocs 7 (voir la figure 2).

La poutre de pare-chocs 7 comprend :
- une traverse 71 qui s'étend transversalement au véhicule et
- deux branches longitudinales 72, qui prolongent la traverse 71 vers l'arrière au voisinage de ses extrémités latérales, et qui se terminent par des platines 8 de fixation aux longerons (non représentés) appartenant à la structure du véhicule. Chaque branche longitudinale 72 comprend un absorbeur d'énergie.

L'armature 4, représentée à la figure 3, est une pièce en matière plastique dont les extrémités latérales servent de support et permettent la fixation des projecteurs 9. L'armature 4 est positionnée entre le pare-chocs 1 et le capot 5. Ses extrémités comportent notamment
- une branche 41 destinée à recevoir la partie inférieure du projecteur 9 et
- une paroi latérale 42 destinée à recevoir une partie d'une paroi latérale du projecteur 9.

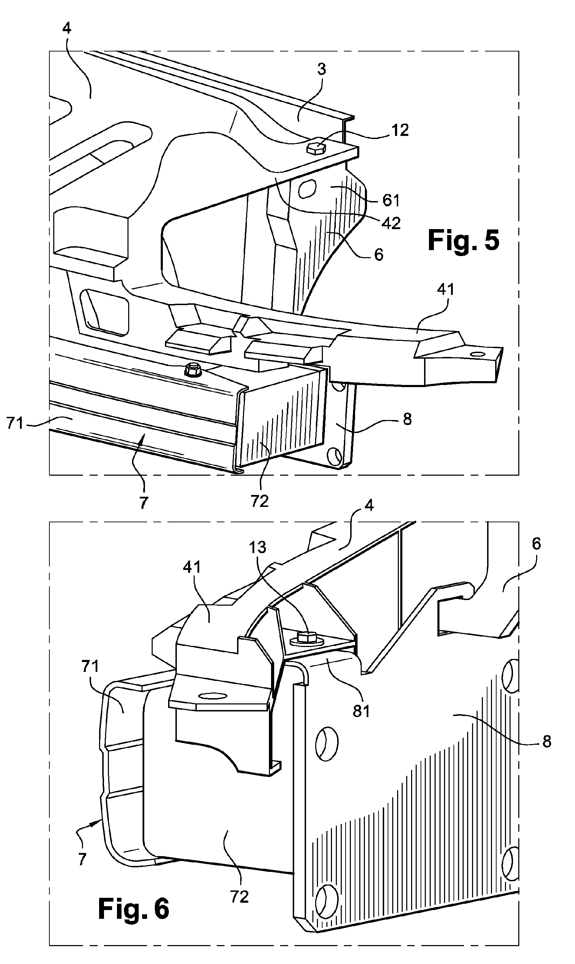

Chaque branche 41 est fixée sur une patte 81 appartenant à la platine 8 (voir la figure 6), par exemple, au moyen de vis 13. Cette patte 81 est recourbée et est positionnée de façon sensiblement perpendiculaire au corps de l'armature 8.

Chaque extrémité de la paroi latérale 42 est fixée sur l'extrémité 61 d'un élément de liaison 6 positionné sur la structure du véhicule (voir la figure 5), par exemple au moyen de vis 12. Cet élément 6 de liaison est communément appelé « équerre appui de façade », il permet également de positionner une pièce transversale 3 supportant des éléments de refroidissement du moteur du véhicule, communément appelée « façade technique », par rapport à la structure du véhicule. La partie supérieure 43 de l'armature 4 est également fixée sur la façade technique 3.

L'invention décrite, ci-après, concerne le procédé d'assemblage de la façade avant 2 du véhicule.

Au cours d'étapes préalables, n'appartenant pas à l'invention, une partie de la façade 2 a été partiellement assemblée, de façon à comporter :
- le capot 5 fixé sur la structure du véhicule,
- la poutre de pare-chocs 7 fixée sur les platines 8,
- la façade technique 3 reliée à la structure par les équerres 6 et
- les ailes 11 fixées sur la structure du véhicule et positionnées par rapport au capot 5.

Au cours de l'assemblage de la façade avant sur les chaînes de montage, lorsque le véhicule décrit ci-dessus se présente devant un opérateur, le capot 5 du véhicule est ouvert.

A partir de ce point, les étapes décrites appartiennent au procédé d'assemblage de l'invention.

Au cours d'une première étape, l'opérateur positionne les parois latérales 42 de l'armature de pare-chocs 4 sur les équerres 6, par exemple au moyen de vis 12. Ces vis sont mises en place de façon à réaliser le maintien de l'armature 4 sur les équerres 6, tout en autorisant le déplacement de l'armature 4. Cette opération permet notamment de positionner, selon l'axe vertical Z du véhicule, l'armature 4.

Au cours d'une seconde étape, l'opérateur place un gabarit 10 sur l'armature 4. Ce gabarit 10 possède des premiers moyens d'ancrage 10a, 10b, 10c destinés à coopérer avec des orifices de l'armature (voir figure 4). Puis, l'opérateur ferme partiellement le capot 5, de façon à ce que des seconds moyens d'ancrage 10d, 10e, du gabarit coopèrent avec des orifices de la doublure du capot 52. Par cette étape, le gabarit 10 et l'armature 4 s'indexent par rapport au capot 5. En effet, le capot 5 est fixe alors que l'armature est juste positionnée et peut donc être déplacée. L'armature 4 est ainsi déplacée jusqu'à atteindre une position précise par rapport au capot 5. Cette étape permet notamment de positionner l'armature 4 dans le plan XY perpendiculaire à l'axe Z du véhicule.

Au cours d'étapes suivantes, l'armature 4 est fixée sur différentes pièces situées dans son environnement afin d'empêcher tout déplacement de l'armature 4 et de garder son positionnement par rapport au capot 5. Ces étapes peuvent notamment se dérouler dans l'ordre suivant, mais tout ordre différent adapté peut être réalisé :
- l'armature 4 est fixée sur les équerres 6 au moyen des vis 12, au cours de cette étape les vis 12 déjà en place sont serrées,
- l'armature 4 est fixée sur les pattes 81 des platines 8, par exemple, au moyen de vis 13,
- la partie supérieure 43 de l'armature 4 est fixée sur la façade technique 3 (non mis en évidence sur les figures), par exemple, au moyen de rivets.

Cette dernière étape permet une stabilisation selon l'axe Z de la zone centrale de l'armature 4.

Bien sûr, selon la configuration de la façade avant, certaines étapes de fixation peuvent être facultatives.

Il est à noter que la première étape de positionnement de l'armature 4, décrite ci-dessus, peut être réalisée sur d'autres pièces situées dans l'environnement de l'armature.

Au cours d'une étape suivante, les projecteurs 9 sont mis en place. Chaque projecteur 9 possède deux points de fixation sur l'armature 4 et un point de fixation sur l'aile 11. Les projecteurs peuvent notamment être fixés par vissage.

Puis, l'opérateur fixe le pare-chocs 1. Le pare-chocs est notamment clippé sur des nervures situées en partie centrale de l'armature 4 ; ses parties latérales sont clippées et/ou vissées sur un support permettant la fixation des ailes 11. Ainsi, le pare-chocs recouvre l'armature 4 et la poutre de pare-chocs 7.

Le gabarit 10 utilisé au cours de l'étape d'indexation peut être utilisé de façon provisoire et être retiré, suite à une étape de fixation de l'armature, par exemple, après la fixation de l'armature 4 sur les platines 8.

Ainsi, grâce au procédé d'assemblage de l'invention, la position du pare-chocs 1 et des projecteurs 9 est optimale par rapport à celle du capot, ce qui garantie l'aspect esthétique de la partie avant du véhicule. Les jeux et affleurements des différentes pièces sont ainsi maîtrisés. Ainsi, chaque projecteur 9 est correctement positionné, selon les axes X, Y et Z, par rapport au capot du véhicule ; en effet, il est fixé sur l'armature 4 et sur une aile 11, elles-mêmes positionnées par rapport au capot. De même, le pare-chocs mis en place sur l'armature indexée par rapport au capot est correctement positionné.

De plus, le fait de fixer la partie supérieure 43 de l'armature 4 sur la façade technique 3 permet de stabiliser selon l'axe Z la zone centrale de l'armature, notamment en cas d'ensoleillement important.

## Revendications

1. Procédé d'assemblage d'un véhicule comprenant
- une structure,
- un pare-chocs (1),
- une armature (4) sur laquelle vient se fixer le pare-chocs (1) et
- un capot (5),
**caractérisé en ce qu'**il comprend
- une étape de fixation du capot (5) sur la structure du véhicule et
- une étape d'indexation de l'armature (4) par rapport au capot (5), de façon à positionner l'armature (4) de façon précise par rapport au capot (5).

2. Procédé d'assemblage selon la revendication 1, **caractérisé en ce que** l'étape d'indexation est suivie d'une étape de fixation de l'armature (4).

3. Procédé d'assemblage selon la revendication 2, **caractérisé en ce que** l'étape de fixation consiste à fixer l'armature (4) sur une pièce transversale (3) supportant des éléments de refroidissement du moteur du véhicule.

4. Procédé d'assemblage selon la revendication 2 ou 3, **caractérisé en ce que** l'étape de fixation consiste à fixer l'armature (4) sur un élément de liaison (6) positionné sur la structure du véhicule.

5. Procédé d'assemblage selon la revendication 4, **caractérisé en ce que** l'étape d'indexation est précédée d'une étape de positionnement de l'armature (4) sur l'élément de liaison (6) afin de permettre le positionnement de l'armature (4) selon l'axe vertical Z du véhicule.

6. Procédé d'assemblage selon l'une quelconque des revendications 2 à 5, **caractérisé en ce que** l'étape de fixation consiste à fixer l'armature (4) sur une platine (8) supportant une poutre (7), ladite poutre (7) étant destinée à être disposée derrière le pare-chocs (1) et servant à absorber une partie de l'énergie due à un choc.

7. Procédé d'assemblage selon l'une quelconque des revendications précédentes, **caractérisé en ce qu'**il comprend une étape de fixation d'un projecteur (9), permettant l'éclairage de la partie située à l'avant du véhicule, sur ladite armature (4).

8. Procédé d'assemblage selon l'une quelconque des revendications 2 à 7, **caractérisé en ce qu'**il comprend une étape de fixation du pare-chocs (1) sur ladite armature (4).

9. Procédé d'assemblage selon l'une quelconque des revendications précédentes, **caractérisé en ce que** l'étape d'indexation est réalisée à l'aide d'un gabarit (10) disposé entre le capot (5) et l'armature (4).

10. Procédé d'assemblage selon la revendication 9, **caractérisé en ce qu'**au cours de l'étape d'indexation, le gabarit est positionné de façon provisoire entre le capot (5) et l'armature (4).
